# EUROPEAN PATENT SPECIFICATION

(11) **EP 3 054 647 B1**
(45) Date of publication and mention of the grant of the patent: **25.03.2020**
(21) Application number: 15290025.4
(22) Date of filing: 03.02.2015
(51) Int. Cl.: H04L 29/06

(54) **MANAGEMENT OF PUSH NOTIFICATIONS FOR MOBILE DEVICES**
Verwaltung von Push-Benachrichtigungen für mobile Vorrichtungen
Gestion de notifications «push» pour dispositifs mobiles

(43) Date of publication of application: 10.08.2016
(73) Proprietor: Alcatel Lucent, 91620 Nozay (FR)
(72) Inventor: Acer, Utku Gunay, 2018 Antwerpen (BE)
(74) Representative: IP HILLS NV

(56) References cited:
- US-A1- 2013 159 377
- US-A1- 2014 067 649
- US-A1- 2014 366 042

## Description

### Technical Field

The present invention generally relates to the field of mobile communication devices and more particular to the management of push notifications on or for mobile communication devices.

In push technology, the initiation for the transmission of the notification does not come from the mobile communication device itself but from a publisher or notification server.

### Background

Mobile devices have been changing the way people reach online content and services. Users no longer use web browsers to access the desired content but dedicated apps or applications installed on their devices. Furthermore, when new information or content is available by a content provider the user is notified through push notifications. The notifying may then be performed by a flashing LED, a beep sound, a vibration, etc.

Though the notifications enable always-on experience, they come with the inconvenience that users are possibly disrupted at inappropriate times. A push notification such as the sound of an instant messaging application can even embarrass the user in certain situations. In addition, most push notifications are only relevant within a time-frame. Thereafter, the notification is no longer relevant.

Furthermore, push notifications also cause energy drain especially when using cellular based data connections. Even though the notification messages are very small, the radio still keeps its radio awake for some time. This time is also referred to as tail time.

A common way to deal with unwanted notifications is to manually turn off the mobile device or turn off the push notifications.

A second solution is disclosed by Veljko Pejovic and Mirco Musolesi in "Interrupt Me: Designing Intelligent Prompting Mechanisms for Pervasive Applications", UbiComp , 2014. Therein, a method is proposed that learns whether a user might respond to a notification based on the users' past behaviour. A library indicating whether users may disregard a notification can then be consulted by applications.

A third solution is disclosed in US2013/0132573A1 by a method and communication system for delivering selected communication events to a user terminal over a communications network.

US 2013/0159377 A1 discloses a platform for providing information to a user based on the user's context. User context may be determined by the platform and may include the time and date, the user's location, the user's scheduled activities, the users current activities, the user's budget, the weather forecast at the user's location, etc. Agents, software components that may run in the cloud and may perform useful tasks for users, may be created and used by the platform. A topic is a collection of metadata that defines how information is handled in different situations. Topics may be created for and by users, may be associated with events and/or locations, and may be configured to use agents to provide potentially useful information, such as ads, coupons, notifications, and alerts, to users subscribed to the topic.

US 2014/0067649 A1 discloses computer implemented method for effecting an autonomous, location-based action vis a vis an individual, comprising detecting an individual's location with a device associated with the individual and without any interaction on the part of the individual with the device at a time of performing the detecting. When the individual's location is determined to be coincident with or proximate to a location for which an action is to be triggered upon detection of the individual being coincident with or proximate to the location, at least one action relative to the individual via the device is automatically taken.

US 2014/0366042 A1 discloses a mobile device that can be configured to monitor environmental, system and user events. The occurrence of one or more events can trigger adjustments to system settings. In some implementations, the mobile device can be configured to keep frequently invoked applications up to date based on a forecast of predicted invocations by the user. In some implementations, the mobile device can receive push notifications associated with applications that indicate that new content is available for the applications to download. The mobile device can launch the applications associated with the push notifications in the background and download the new content. In some implementations, before running an application or accessing a network interface, the mobile device can be configured to check energy and data budgets and environmental conditions of the mobile device to preserve a high quality user experience.

### Summary

The above solutions pose several disadvantages. By completely turning off notifications, users do not only avoid unwanted notifications but may also miss other important notifications. In the second solution, although some messages are not notified, they are nevertheless received and thus energy consumption remains as before. In the third solution, a selection is made remotely. However, the selection is performed statically from the user side, i.e., the selection does not take into account the user's situation.

It is an object to alleviate the above disadvantages and to propose a solution for the management of these pushed notifications that is energy efficient.

According to a first aspect, this is achieved by the mobile communication device according to claim 1.

The device thus only receives a selection of pushed notifications and not all notifications. This selection is performed at a remote location by a remote notification service. Therefore, the device will consume less power than conventional devices that receive all messages and make the selection in the device. Furthermore, the selection is dependent on the user context, i.e., the selection changes dependent on the context of the user, for example dependent on his location or what he is doing. By the context module on the device, the context information is derived. By the context information, there is more information available than what is present in the notification itself thereby providing a more accurate selection of notifications to the user.

The mobile communication device may further comprise a processor adapted to run user applications and the pushed notifications may then be associated with such user applications, for example a weather forecast application, a mail application, a messaging application, a VoIP application or a social media application.

The mobile communication device comprises a decision module for deriving a selection of the applications of which associated pushed notifications should not be notified to the user according to the context information. The notification module is further configured to request the notification service not to send pushed notifications associated with this selection of applications.

The selection of notifications is made at some point in time at the application level by the mobile communication device. Dependent on the context information, the mobile device selects for which applications it desires to receive notifications. This selection of applications is then sent to the notification service which, on its turn, will only push notifications to the device if they are associated with one of the selected applications.

It is an advantage that no context information has to be sent to the notification service as this safeguards the privacy of the user. It is a further advantage that the selection of notifications at the notification server is simple and straightforward while still being context based.

The notification module is further configured to send the context information to the notification service in order for the notification service to determine the select notifications from this context information.

In this case, the decision taking is thus performed completely at the notification server thereby further reducing power consumption on the mobile device. The granularity of the selecting is also further refined as the notification server can also select messages within a single application.

According to a second aspect, the disclosure relates to a system comprising a mobile communication device according to the first aspect and the notification service running on a computing system remotely from the communication device. The notification service is adapted to receive the notifications from third party content providers together with a device token identifying the mobile communication device to which the notifications are to be pushed.

The notification service thus receives notifications destined for the mobile device from different parties, for example from a mail server or a social media provider. In order to check that the third party is allowed to deliver notifications to the mobile device, the notification is accompanied by a unique token. When the token is verified, the notification service then verifies whether the notification can be delivered according to the context information and pushes the notification to the device if allowed.

It is an advantage that a single notification service can take care of notifications from different parties as it allows a single interface with the mobile device for the exchange of context information.

The mobile communication device comprises a processor adapted to run user applications. A pushed notification is then associated with a user application and created by a respective third party content provider. The user application is further adapted to request by the notification module the device token from the notification service and to transmit this device token to the third party content provider.

This allows the third party content provider to obtain the device token in order to send the notifications to the mobile device by the notification service. By conducting the registration process through the mobile device with the notification service, the notification service can easily identify the device in order to issue the token.

According to a third aspect, the disclosure relates to a method for selecting pushed notifications send from a remote notification service to a mobile communication device comprising the following steps performed on this device:
- Determining context information;
- Requesting the notification service to only push select notifications that the user is interested in according to the context information.

According to a fourth aspect, the disclosure relates to a computer program product comprising computer-executable instructions for performing the method according to the third aspect when the program is run on a computer.

According to a fifth aspect, the disclosure relates to a computer readable storage medium comprising the computer program product according to the fourth aspect.

According to a sixth aspect, the disclosure relates to a data processing system programmed for carrying out the method according to the third aspect.

The present invention defines a device according to claim 1, a method according to claim 4, a computer program product according to claim 5 and a system according to claim 7. Further embodiments are set forth in the dependent claims 2-, 3 and 6.

### Brief Description of the Drawings

Fig. 1 illustrates a mobile communication device and notification server according to an embodiment; and
Fig. 2 illustrates a context module according to an embodiment; and
Fig. 3 illustrates a mobile communication device and notification server according to an embodiment useful for the comprehension of the invention; and
Fig. 4 illustrates steps between a communication device, a notification server and a third party service provider in order to push a notification to the communication device.

### Detailed Description of Embodiments

The present disclosure relates to mobile communication devices and the management of push notification to be shown or notified to a user of the mobile communication device. The notifications are delivered to the communication device by a remote notification server which may on its turn receive the notifications from a third party application provider. The push notification originates from such an application provider or service provider and is associated with a client application running on the mobile communication device.

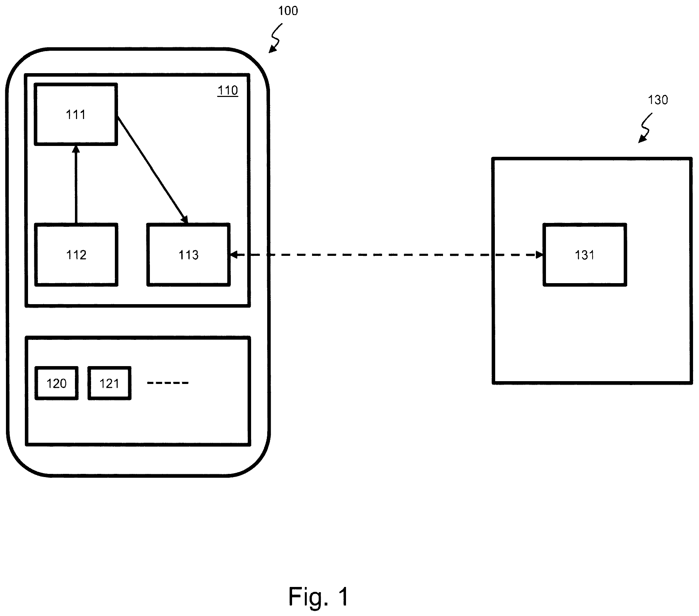

According to an embodiment, a mobile communication device 100 is provided as illustrated in Fig. 1. The device runs an operating system 110 comprising three functional modules, a decision module 111, a context module 112 and a notification module 113.

In the context module 112, information is collected from various resources in the device. This information is then used to derive context information about the user. This context information may for example comprise the current activity of the user, his location or how often he interacts with the phone. Such information defines the current context of the user.

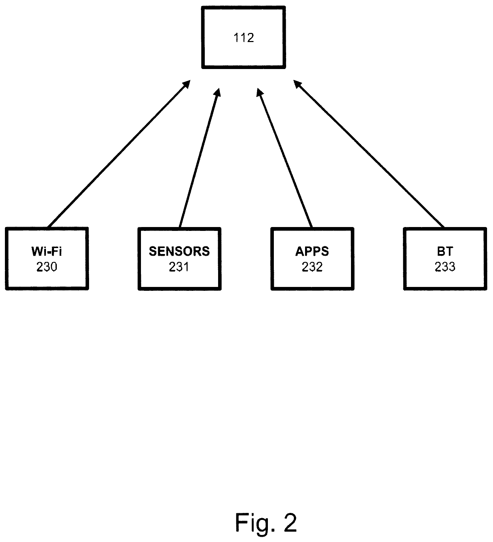

Fig. 2 illustrates a set of resources 230 to 233 that may be used by the context module 112. Resource 231 comprises the set of sensors available in the communication device such as for example a GPS, accelerometer or touch sensors. Another resource of information may be information retrieved from wireless communication means provided by the device such as the Wi-Fi module 230 that can provide information about nearby Wi-Fi networks or the Bluetooth module 233 than can provide information about surrounding Bluetooth enabled devices. Another resource of information are the applications 232 installed on the device itself such as a social networking app, a calendar application or a mail application.

All these resources may be used to define the user's context. For example, if the device is connected to an automobile over Bluetooth, the user does not touch his device often and the navigation application is open, the context module concludes that his current activity is "driving a car". In another example, if there is a meeting entry in a calendar application and the context module 112 is aware of Wi-Fi networks available at the working place of the user, the context module 112 then derives that the user's activity is "in a meeting at work". On the other hand, if the context module 112 sees the home Wi-Fi network in the evening, it deducts that the user's activity is "resting at home".

The context module 112 provides the decision module 111 with the user's context information. This may be done when the user's context changes. Alternatively, this may be done periodically.

The decision module 111 then decides for what applications 120, 121... the user is interested to receive push notifications. The module 111 considers the user's past behaviour for each application and the push notifications for that application. The decision unit may consider whether the user has looked at the notification from an application in the past within the same context. It may further consider how long it took the user to view the notifications, whether the user launched the corresponding application after viewing the notification or has simply discarded the notification. Based on past behaviour and the context information, the decision module determines if the user is interested in the notifications for every application 120, 121... The determination may be performed by machine learning techniques, for example by the use of classifiers.

The decision made by decision module 111 is then passed to the notification module 113. Based on the decision, the notification module then registers or unregisters the applications with the remote notification server 130, i.e., it notifies the notification server 130 whether notifications should be pushed to the communication device 100 for notifications associated with each of the respective applications. The notification module 113 further receives the notifications from the notification server 131 and delivers them to the respective applications 120, 121... As a result, at one moment in time push notifications for one application may be received on the device 100, but not at another moment in time due to a change in the user's context.

The notification server 130 further comprises a selection module 131 where the selection of the notifications is performed according to the subset of applications that are registered by the notification module 113.

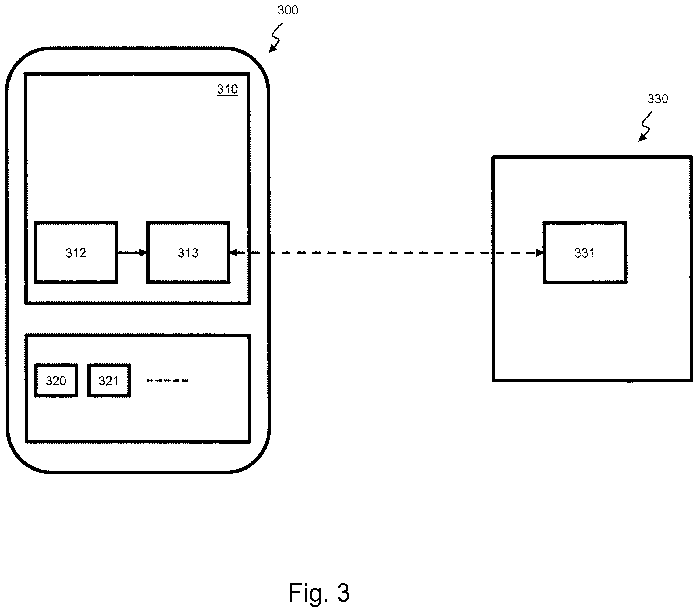

Fig. 3 illustrates a mobile device 300 and notification server 330 according to an embodiment useful for the comprehension of the invention. Similar to the embodiment of Fig. 1, the mobile communication device 300 runs an operating system 310 which further enables to run applications 320, 321... on the mobile device. The communication device further comprises a context module 312 similar to module 112 for deriving a user's context. Then, when the context of the user changes or periodically, the context is provided to the notification module 313.

The notification module 313 also registers for push notifications for select applications 320, 321... with the notification server 330. As there is no decision module, the select applications are not based on the derived user's context. Therefore, the notification module may register all applications or a selection as specified by the user according to his preferences.

The notification module 313 also receives the push notifications from the notification server 330 and, on its turn, distributes them to the respective applications 320, 321...

The notification module 313 sends the user's context as received from the context module 321 to the notification server 330. This may be done periodically or when the user's context has changed. The notification module also reports further information regarding the user's behaviour with the push notifications in a certain context to the notification server 330. Such information may for example comprise whether the user has looked at the notification from an application within its context, how long it took to view the notifications or whether the user has launched the application after viewing the notification or has simply discarded the notification.

For sending the context information and the further information regarding the user's behaviour, the notification module 313 may maintain a persistent connection over the network with the notification server 330. Such a persistent connection may for example be in the form of a TCP connection. Such a persistent connection is typically already maintained by the operating system 310 to receive the push notifications as is the case in the Android and iOS operating systems. The connection is then maintained through periodic heartbeat messages in order to prevent a tear down of the connection. In addition, mobile device 300 sends feedback messages for the received push notifications to the notification server. These feedback message may then be used to embed the context information and the further information regarding the user's behaviour.

Notification server 330 maintains a connection with the device 300 and other similar devices. Notification server 330 also maintains a connection with third party application or content providers. These provider deliver the push notifications to the notification server 330 that have to be sent to communication device 300.

Notification server 330 further comprises a selection module 331 for selecting from the received push notifications a selection to forward to the device 300. This selection module may comprise the same functionality as the selection module 131 in Fig. 1, i.e., select push notifications according to the registered applications. Selection module 331 further maintains data about the user's past behaviour with the push notifications as received from the notification module 313. Based on this past behaviour, notification server employs machine learning techniques to determine whether a user of the mobile device 300 is interested in a respective push notification. For doing so, selection module 331 may consider factors like the application that the push notification is associated with, the user's current context or the contents of the push notification. Inspecting the content is particularly advantageous as mobile service providers are gradually allowing push notifications that comprise a data payload as large as 4096 bytes. This way, the notification may provide a brief summary of the subject of the notification rather than a simple 'new content in the server' message. For example, in an instant messaging application, this data payload may be used to deliver the message itself. In email application, the data payload may include the sender, the subject, the list of recipients if there are others and the first few sentences of the notified email. This data payload may then be used to evaluate how critical a push notification is for the user and to decide to deliver it or not.

An advantage of the embodiments according to Fig. 1 and 3 is that the notification server may, as a cloud computing application, offer a larger amount of resources than the mobile device in terms of computation power and storage capacity. Furthermore, no energy is consumed in the mobile device 100, 300 to perform the decision taking process. A further advantage of the embodiment according to Fig. 3 is that the granularity of the notification selection is finer as decisions to select a notification can be made within an application. With this mechanism, the push notification server may deliver an instant messaging push notification during a work meeting about a work relevant topic but refrain from notifying an email sent by a friend to a work email address. Similarly, selection module 331 may decide not to send a social networking push notification from the user's employer when the user is at home in the evening.

In both embodiments, the system may be fed with user preferences. This may for example be done by a user preference screen on the mobile communication device 100, 300. Within the user preference screen, the system may present to the user which decisions have been made in the past or may be made in the future and ask the user to verify or revert the decisions. This may be done every time a decision is made or later on. Such feedback is then used for future decisions. Future decisions then respect the preferences of the users under various situations.

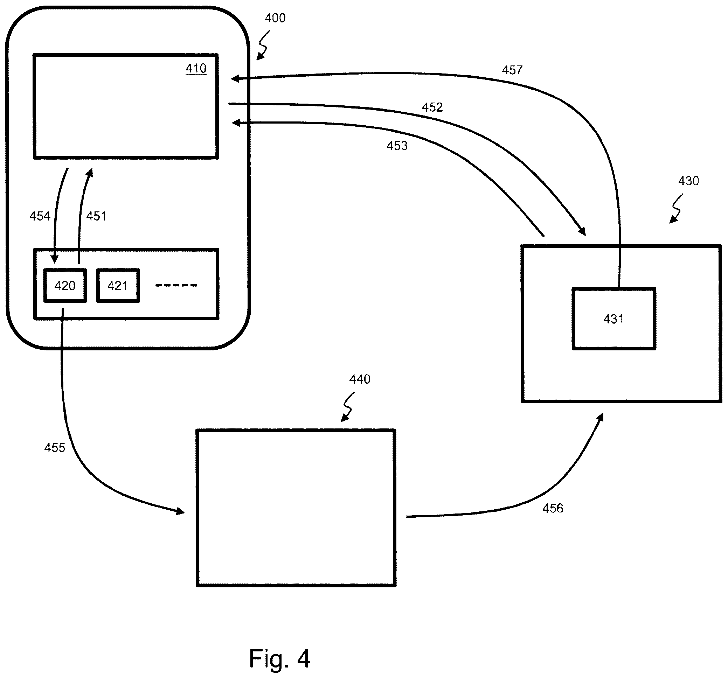

Fig. 4 illustrates a system that is used in combination with the embodiments of Fig. 1 and/or Fig. 3. With this system it is guaranteed that only notifications for verified applications 420, 421... are send to the mobile communication device 400.

The system comprises one or more mobile communication devices 400 similar to device 100 and 300 from Fig. 1 and Fig. 3 respectively. The device 400 runs an operating system 410 and one or more applications 420, 421... A client application 420 is associated with a third party service provider 440. Push notifications originate from such a third party service provider 440 and are to be pushed to the user via the notification server 430 which may be embodied by the notification server 130 or 330 of Fig. 1 or Fig. 3 respectively. When a third party service provider wants to have push notifications enabled on the device 400, several steps are performed.

In a first step 451, the client application 420 associated with the service offered by the provider 440 registers itself to the operating system 410 to have push notifications enabled. In step 452, the operating system 410 contacts the notification server 430 and requests a device token. The device token is unique for the device 400 and the specific registering application 420. This generated token is both stored in the notification server 430 and sent back to the device 400 in step 453. The operating system 410 then passes the token to the registering application 420. The application 420 on its turn forwards the token in step 455 to the associated service provider 440.

If, at some moment, the service provider 440 wants to notify the user of the device 400 by a push notification, it sends the push notification together with the token in step 456 to the notification service 430. The service then verifies whether the service provider 440 may send notifications to the device 400. If so, the notification is processed in the selection module 431 in order to decide to send it to the device 400 or not. The selection module may operate according to module 131 or 331 of Fig. 1 or Fig. 3 respectively. If selected, the notification is pushed to the device 400 in step 457 and notified to the user.

## Claims

1. A mobile communication device (100, 400) configured to notify pushed notifications from a remote notification service (130, 430) to a user comprising:
- a context module (112) for determining context information;
- a processor adapted to run user applications (120, 121, 420, 421) and wherein said pushed notifications are associated with said user applications;
- a decision module (111) for deriving a selection of said applications of which associated pushed notifications should be, or should not be notified to said user according to said context information when the context information changes or periodically; and
- a notification module (113) configured to request said notification service (130) to send, respectively not to send, pushed notifications associated with said selection of applications.

2. A system (400, 430) comprising a mobile communication (400) device according to claim 1 and said notification service (430) running on a computing system remotely from said communication device; and wherein said notification service is adapted to receive (456) said notifications from third party content providers (440) together with a device token identifying said mobile communication device to which said notifications are to be pushed.

3. A system (400, 430) according to claim 2 wherein said mobile communication device comprises a processor adapted to run user applications (420, 421) and wherein a pushed notification is associated with a user application and created by a respective third party content provider (440); and wherein said user application is adapted to request (451, 452) by said notification module said device token from said notification service and to transmit (455) said device token to said third party content provider.

4. A method for selecting pushed notifications sent from a remote notification service (130, 430) to a mobile communication device (100, 400) comprising the following steps performed on said device:
- determining context information; and
- associating said pushed notifications with user applications installed on said mobile communication device; and
- deriving a selection of said user applications of which associated pushed notifications should be, or should not be, notified to said user according to said context information when the context information changes or periodically; and
- requesting said notification service (130) to send, respectively not to send pushed notifications associated with said selection of applications.

5. A computer program product comprising computer-executable instructions for performing the method according to claim 4 when the program is run on a computer.

6. A computer readable storage medium comprising the computer program product according to claim 5.

7. A data processing system programmed for carrying out the method according to claim 4.

## Patentansprüche

1. Mobile Kommunikationsvorrichtung (100, 400), die zum Melden von Push-Benachrichtigungen von einem Fernbenachrichtigungsdienst (130, 430) an einen Benutzer konfiguriert ist und umfasst:
- ein Kontextmodul (112) zum Bestimmen von Kontextinformationen;
- einen Prozessor, der zum Ausführen von Benutzeranwendungen (120, 121, 420, 421) ausgelegt ist, und wobei die Push-Benachrichtigungen mit den Benutzeranwendungen assoziiert sind;
- ein Entscheidungsmodul (111) zum Ableiten einer Auswahl der Anwendungen, von welchen assoziierte Push-Benachrichtigungen an den Benutzer gemeldet oder nicht gemeldet werden sollten, gemäß den Kontextinformationen, wenn sich die Kontextinformationen ändern, oder periodisch; und
- ein Benachrichtigungsmodul (113), das so konfiguriert ist, dass es den Benachrichtigungsdienst (130) auffordert, Push-Benachrichtigungen, die mit der Auswahl von Anwendungen assoziiert sind, zu senden bzw. nicht zu senden.

2. System (400, 430), umfassend eine mobile Kommunikationsvorrichtung (400) nach Anspruch 1 und den Benachrichtigungsdienst (430), der auf einem von der Kommunikationsvorrichtung entfernten Rechenvorrichtung ausgeführt wird; und wobei der Benachrichtigungsdienst so ausgelegt ist, dass er die Benachrichtigungen von Drittanbietern von Inhalt (440) zusammen mit einem Vorrichtungstoken empfängt (456), der die mobile Kommunikationsvorrichtung identifiziert, an welche die Benachrichtigungen gepusht werden.

3. System (400, 430) nach Anspruch 2, wobei die mobile Kommunikationsvorrichtung einen Prozessor umfasst, der zum Ausführen von Benutzeranwendungen (420, 421) ausgelegt ist, und wobei eine Push-Benachrichtigung mit einer Benutzeranwendung assoziiert ist und von einem jeweiligen Drittanbieter von Inhalt (440) erzeugt wird; and wobei die Benutzeranwendung so ausgelegt ist, dass sie durch das Benachrichtigungsmodul den Vorrichtungstoken vom Benachrichtigungsdienst anfordert (451, 452) und den Vorrichtungstoken an den Drittanbieter von Inhalt sendet (455).

4. Verfahren zum Auswählen von Push-Nachrichten, die von einem Fernbenachrichtigungsdienst (130, 430) an eine mobile Kommunikationsvorrichtung (100, 400) gesendet werden, umfassend die folgenden Schritte, die an der Vorrichtung ausgeführt werden:
- Bestimmen von Kontextinformationen; und
- Assoziieren der Push-Benachrichtigungen mit Benutzeranwendungen, die auf der Mobilkommunikationsvorrichtung installiert sind; und
- Ableiten einer Auswahl der Anwendungen, von welchen assoziierte Push-Benachrichtigungen an den Benutzer gemeldet oder nicht gemeldet werden sollten, gemäß den Kontextinformationen, wenn sich die Kontextinformationen ändern, oder periodisch; und
- Auffordern des Benachrichtigungsdienstes (130), Push-Benachrichtigungen, die mit der Auswahl von Anwendungen assoziiert sind, zu senden bzw. nicht zu senden.

5. Computerprogrammprodukt, umfassend computerausführbare Anweisungen zum Durchführen des Verfahrens nach Anspruch 4 bei Ausführung des Programms auf einem Computer.

6. Computerlesbares Speichermedium, umfassend das Computerprogrammprodukt nach Anspruch 5.

7. Datenverarbeitungssystem, das zum Ausführen des Verfahrens nach Anspruch 4 programmiert ist.

## Revendications

1. Dispositif de communication mobile (100, 400), configuré pour notifier des notifications poussées d'un service de notification distant (130, 430) à un utilisateur, comprenant :
- un module de contexte (112) pour déterminer des informations de contexte ;
- un processeur adapté pour exécuter des applications utilisateur (120, 121, 420, 421), et lesdites notifications poussées étant associées auxdites applications utilisateur ;
- un module de décision (111) pour dériver une sélection desdites applications dont des notifications poussées associées sont à notifier ou non audit utilisateur selon lesdites informations de contexte quand les informations de contexte changent, ou bien périodiquement ; et
- un module de notification (113) configuré pour demander audit service de notification (130) d'envoyer, respectivement de ne pas envoyer, des notifications poussées associées à ladite sélection d'applications.

2. Système (400, 430), comprenant un dispositif de communication mobile (400) selon la revendication 1 et ledit service de notification (430) s'exécutant sur un système informatique à distance dudit dispositif de communication ; et dans lequel ledit service de notification est adapté pour recevoir (456) lesdites notifications de fournisseurs de contenu tiers (440) avec un jeton de dispositif identifiant ledit dispositif de communication mobile vers lequel lesdites notifications sont à pousser.

3. Système (400, 430) selon la revendication 2, dans lequel ledit dispositif de communication mobile comprend un processeur adapté pour exécuter des applications utilisateur (420, 421), et dans lequel une notification poussée est associée à une application utilisateur et créée par un fournisseur de contenu tiers (440) respectif ; et dans lequel ladite application utilisateur est adaptée pour demander (451, 452) par ledit module de notification ledit jeton de dispositif auprès du service de notification et pour transmettre (455) ledit jeton de dispositif audit fournisseur de contenu tiers.

4. Procédé permettant de sélectionner des notifications poussées envoyées d'un service de notification distant (130, 430) à un dispositif de communication mobile (100, 400), comprenant les étapes suivantes effectuées sur ledit dispositif :
- la détermination d'informations de contexte ; et
- l'association desdites notifications poussées à des applications utilisateur installées sur ledit dispositif de communication mobile ; et
- la dérivation d'une sélection desdites applications utilisateur dont des notifications poussées associées sont à notifier ou non audit utilisateur selon lesdites informations de contexte quand les informations de contexte changent, ou bien périodiquement ; et
- la demande audit service de notification (130) d'envoyer, respectivement de ne pas envoyer, des notifications poussées associées à ladite sélection d'applications.

5. Produit de programme informatique, comprenant des instructions exécutables par ordinateur pour effectuer le procédé selon la revendication 4 lorsque le programme est exécuté sur un ordinateur.

6. Support de stockage lisible par ordinateur, comprenant le produit de programme informatique selon la revendication 5.

7. Système de traitement de données programmé pour effectuer le procédé selon la revendication 4.
